# EUROPEAN PATENT SPECIFICATION

(11) **EP 3 995 319 B1**
(45) Date of publication and mention of the grant of the patent: **29.11.2023**
(21) Application number: 21202051.5
(22) Date of filing: 12.10.2021
(51) Int. Cl.: B60B 33/00, B60B 33/02

(54) **CASTER DEVICE**
LENKROLLENSYSTEM
DISPOSITIF À ROULETTES

(30) Priority: 06.11.2020 JP 2020185891
(43) Date of publication of application: 11.05.2022
(73) Proprietor: Aichi Co., Ltd., Higashi-ku Nagoya-shi, Aichi-ken 461-0003 (JP)
(72) Inventor: Saito, Takayuki, Nagoya-shi, 461-0003 (JP)
(74) Representative: Otten, Roth, Dobler & Partner mbB Patentanwälte

(56) References cited:
- DE-U1- 20 206 038
- JP-A- 2009 073 318
- US-A1- 2002 189 051
- US-A1- 2014 143 982

## Description

### CROSS-REFERENCE TO RELATED APPLICATION

The present application claims the benefit of Japanese Patent Application No. 2020-185891 filed on November 6, 2020 with the Japan Patent Office.

### BACKGROUND

The present invention relates to a caster device with at least one caster.

Examples of widely known caster devices with a locking mechanism includes those in which a locking member is displaced inside a caster (see, for example, JP2009153684A). The locking member is provided with traveling-inhibiting teeth that mesh with an internal gear of the caster. In such a configuration, the locking member is displaced to transition the caster between a locked state where the caster is not rotationally driven and an unlocked state where the caster can be rotationally driven.

In the state of the art the US 2014/143982 A1, the US 2002/189051 A1 and the DE 202 06 038 U1 disclose further caster devices.

### SUMMARY

The above-described configuration includes a relatively large locking member and a mechanism for moving the locking mechanism in the vicinity of the caster, thus rendering the configuration of the locking mechanism complicated and making it difficult to provide sufficient space for arranging each member.

It is desirable that the present invention provides a caster device with at least one caster in which a locking mechanism has a simplified configuration.

The solution is realized by the features of claim 1. In the dependent claims there are described further advantageous and functional embodiments.

One aspect of the present invention provides a caster device with at least one caster. The caster device includes grooves, a bar-shaped pin, and an interlocked portion. The grooves are rotatable in association with rotation of the caster about a drive axis of the caster about a drive axis of the at least one caster. The pin is displaceable between a first and a second position. The first position is where an end of the pin engages with any one of the grooves and thereby the caster is in a locked state. The second position is where the end of the pin is away from the grooves and thus the at least one caster is in an unlocked state. The interlocked portion is interlocked with the pin and displaceable in response to an external force so as to displace the pin between the first and second positions.

With such a configuration, driving the interlocked portion can cause the pin to be driven and thereby the at least one caster to be transitioned between the locked and unlocked states. The caster device only needs to have a configuration to drive the pin in the vicinity of the caster; thus, the configuration to lock and unlock the caster can be simplified as compared with conventional configurations.

In the present invention, the caster device may further include a biasing member urging the pin in a first direction. The interlocked portion may be movable to be away from the pin. The interlocked portion may be configured to press the pin against an urging force of the biasing member so as to displace the pin.

With such a configuration, the pin and the interlocked portion can be moved away from each other, which hinders transmission of the external force applied to one of the pin and the interlocked portion to another. Accordingly, it is possible to reduce transmission of vibration to each member, such as the pin and the interlocked portion, and thus to reduce a load imposed on each member due to an impact.

In the present invention, the at least one caster may include two wheels each having two or more grooves formed on inner circumferential surfaces of the two wheels. The two wheels may face each other across the pin. The pin may be configured such that, in the locked state, each end of the pin in a longitudinal direction is engageable with any one of the two or more grooves of a corresponding wheel of the two wheels.

Such a configuration can improve the likelihood that at least one end of the pin engages with the grooves.

In the present invention, the caster device may further include at least one driving retainer, a turning retainer, and a turning inhibiting portion. The at least one driving retainer may be configured to hold the at least one caster such that the at least one caster is rotatable about the drive axis. The turning retainer may be configured to hold the at least one driving retainer such that the at least one driving retainer is rotatable about a turn axis orthogonal to the drive axis. The turning inhibiting portion may be configured to transition between a rotation inhibited state where the at least one driving retainer is inhibited from rotating and a rotation allowed state where the at least one driving retainer is allowed to rotate.

Such a configuration can also inhibit the rotation in the turning direction in the case where the caster is rotatable about the drive axis and in the turning direction.

In the present invention, the turning inhibiting portion may include a projecting portion and a movable portion. The projecting portion may be arranged on the turning retainer. The movable portion may be configured to mesh with the projecting portion in the rotation inhibited state, and to be positioned away from the projecting portion in the rotation allowed state.

With such a configuration, the rotation in the turning direction can be inhibited by meshing of the projecting portion and the movable portion.

In the present invention, the movable portion may be integrally formed with the interlocked portion into a single piece.

With such a configuration, the movable portion is integrally formed with the interlocked portion into a single piece and thereby the number of parts can be reduced. This configuration also enables simultaneous locking or unlocking of the rotation of the caster about the drive axis and the rotation of the caster about the turn axis.

In the present invention, the caster device may include two or more driving retainers each including one caster in a rotatable manner. The turning retainer may be configured to hold the two or more driving retainers in a rotatable manner.

The turning retainer is a member that is likely to have a relatively large weight since it retains two or more driving retainers. If the configuration includes the above-described projecting portion and the movable portion, the turning retainer is provided with the projecting portions, thereby inhibiting the rotation about the turn axis. Accordingly, it is possible to inhibit the caster from jiggling and to reliably maintain the rotation inhibited state.

### BRIEF DESCRIPTION OF THE DRAWINGS

Example embodiments of the present invention will be described hereinafter with reference to the accompanying drawings, in which:
FIG. 1 shows a perspective view of a mobile table;
FIG. 2 shows a side end view of a caster device according to one embodiment;
FIG. 3 shows an exploded perspective view of a caster;
FIG. 4 shows an exploded perspective view of a locking mechanism;
FIG. 5 shows an end view of the caster device in a locked state;
FIG. 6 shows an end view of the caster device in an unlocked state;
FIG. 7 shows a cross-sectional diagram of the caster;
FIG. 8 shows a perspective view of a pin according to another embodiment;
FIG. 9 shows a perspective view of a pin according to still another embodiment; and
FIG. 10 shows is a perspective view of a pin according to further another embodiment.

### DETAILED DESCRIPTION OF EXEMPLARY EMBODIMENTS

Embodiments of the present invention should not be limited to those described below, and the present invention may be implemented in various ways within the technical scope of the present invention.

### [1. Embodiment]

A first coil spring 36 in the present embodiment corresponds to one example of the biasing member of the present invention.

A drive shaft 31 and a housing 41 (particularly, a turning shaft 41A) in the embodiment correspond to one example of the driving retainer of the present invention.

A casing 20 (particularly, a cylindrical portion 20A) in the embodiment corresponds to one example of the turning retainer of the present invention.

The casing 20 (particularly, projections 20B) and an interlocked portion 50 (particularly, recesses 50E) in the embodiment correspond to one example of the turning inhibiting portion of the present invention,

The interlocked portion 50 in the embodiment corresponds to one example of the movable portion of the present invention.

### [1-2. Overall Configuration]

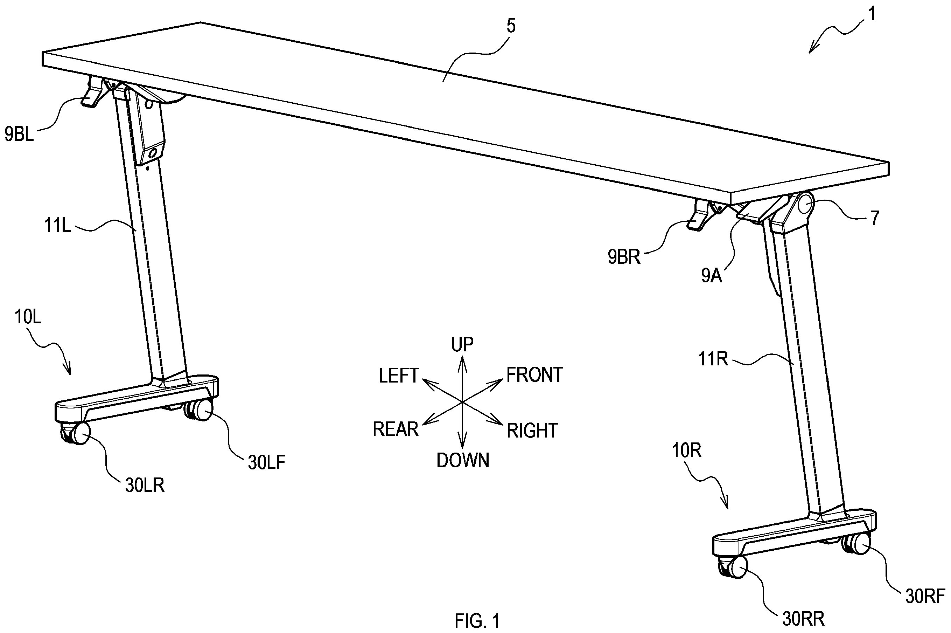

As shown in FIG. 1, a mobile table 1 in the present embodiment includes a top panel 5 and caster devices 10L, 10R. The caster device 10L is disposed below a leg 11L provided on the left side of the top panel 5. The caster device 10R is disposed below a leg 11R provided on the right side of the top panel 5. The caster device 10L includes casters 30LF, 30LR. The caster device 10R includes casters 30RF, 30RR.

Hereinafter, the casters 30LF, 30LR, 30RF, 30RR will be collectively referred to as casters 30. Of the casters 30, any one or more of the casters 30LF, 30LR, 30RF, 30RR will be referred to as at least one caster 30.

Of the caster devices 10L, 10R, the caster device 10L will be described.

The caster device 10R is configured similarly to the caster device 10L. Of the casters 30LF, 30LR, 30RF, 30RR, the caster 30LF will be described. The casters 30LR, 30RF, 30RR are configured similarly to the caster 30LF. Of the legs 11L, 11R, the leg 11L will be described. The leg 11R is configured similarly to the leg 11L.

The caster device 10L includes at least one of the casters 30LF, 30LR, and the caster device 10R likewise includes at least one of the casters 30RF, 30RR. The front side of the mobile table 1 is located on far-right side in FIG. 1, and the rear side thereof is located on the near-left side.

The caster device 10L is coupled with the top panel 5 through the leg 11L. The top panel 5 is rotatable about a retaining shaft (not shown) provided between the upper ends of the legs 11L, 11R. The retaining shaft is arranged inside of a shaft cover 7 to be hidden by the top panel 5 and the shaft cover 7, and extends in the left-right direction of the mobile table 1. The top panel 5 rotates about the retaining shaft and is thereby displaceable between an in-use position where the upper surface of the top panel 5 is parallel to a horizontal plane and a folded position where the upper surface of the top panel 5 is nearly in parallel to the longitudinal direction of the legs 11L, 11R. The top panel 5 is brought to the in-use position when the mobile table 1 is used, and to the folded position when the mobile table 1 is not used. In associated with such a movement of the top panel 5, a rod 12, which will be described later, is displaced upward and downward.

The mobile table 1 further includes a pair of folding levers 9A and a pair of fine-adjustment levers 9BL, 9BR disposed at the lower-left and lower-right ends of the top panel 5 in the rear view of the mobile table 1. The top panel 5 becomes displaceable between the in-use position and the folded position when a user operates either of the folding levers 9A. The fine-adjustment levers 9BL, 9BR can be operated by a user. This operation also causes the upward and downward displacement of the rod 12. When the rod 12 is displaced upward and downward, the state of the casters 30 is switched between a locked state where rotation of the casters 30 is inhibited and an unlocked state where the rotation of the casters 30 is allowed.

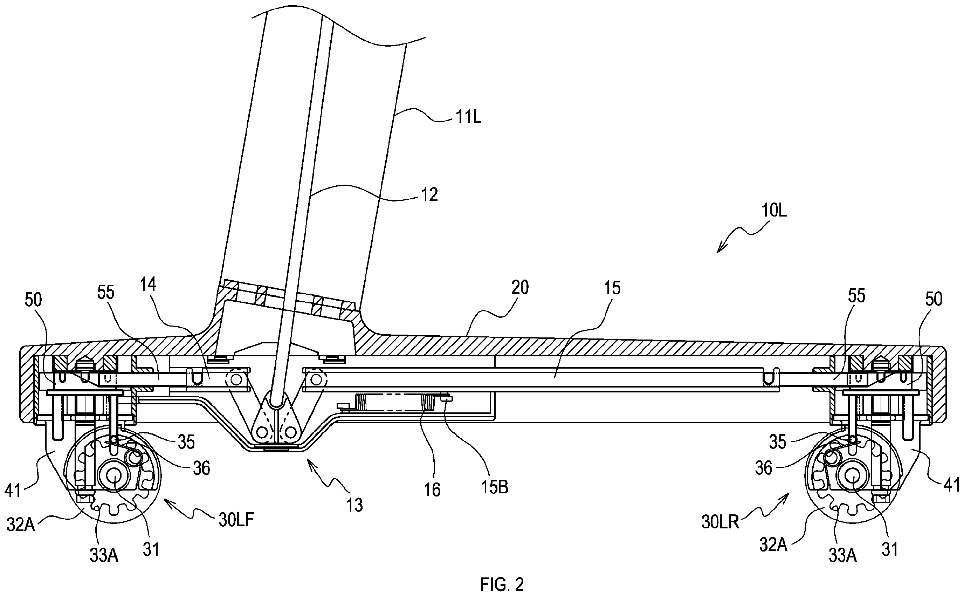

As shown in FIG. 2, the caster device 10L includes a link mechanism 13, sliding portions 14, 15, the casing 20, casters 30LF, 30LR, the interlocked portions 50, pins 35, and U-shaped portions 55. FIGS. 2, 5, and 6, which will be described below, show end views of the caster device 10L in which some of the constituent members, such as the casing 20, are transparently depicted. The link mechanism 13, the sliding portions 14, 15, the interlocked portions 50, and the U-shaped portions 55 are arranged inside of the casing 20. The casing 20 forms an outer shell of the caster device 10L.

### [1-3. Configuration of Link Mechanism]

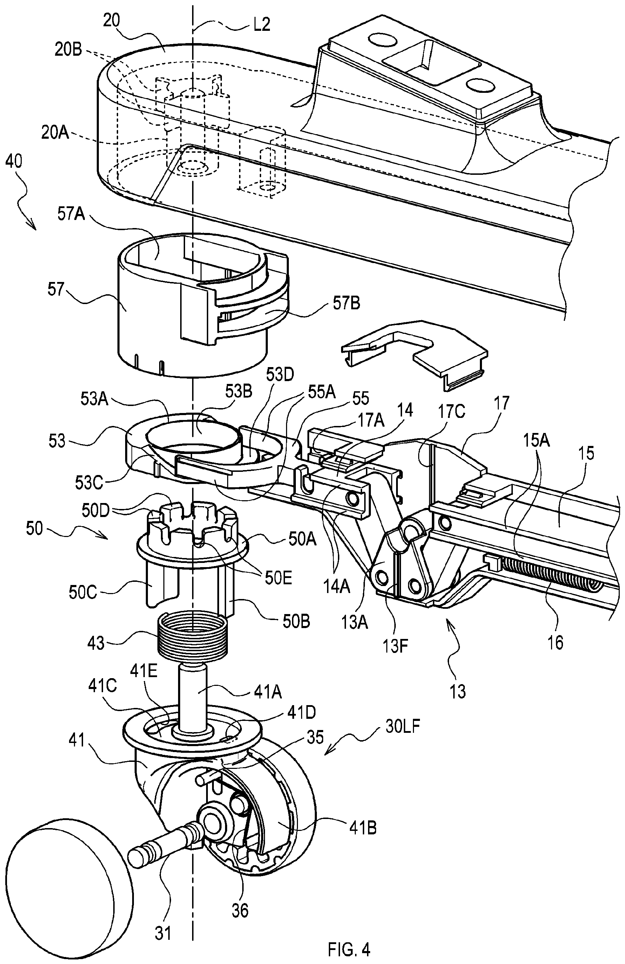

The rod 12 is disposed inside of the leg 11L and moves substantially in the vertical direction. The link mechanism 13 converts the movement of the rod 12 substantially in the vertical direction to the movements of the sliding portions 14, 15 substantially in the horizontal direction. As shown in FIGS. 4 to 6, the link mechanism 13 and the sliding portions 14, 15 are housed in a storing portion 17. The storing portion 17 is arranged to hold the sliding portions 14, 15 from the front and back sides of the sheet surfaces of FIGS. 2, 5, and 6.

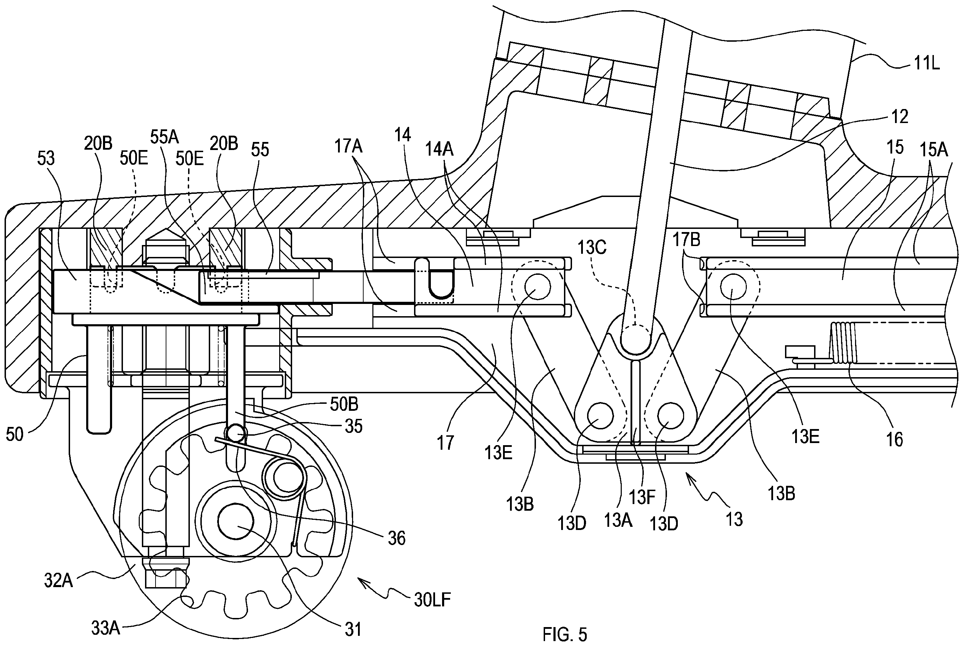

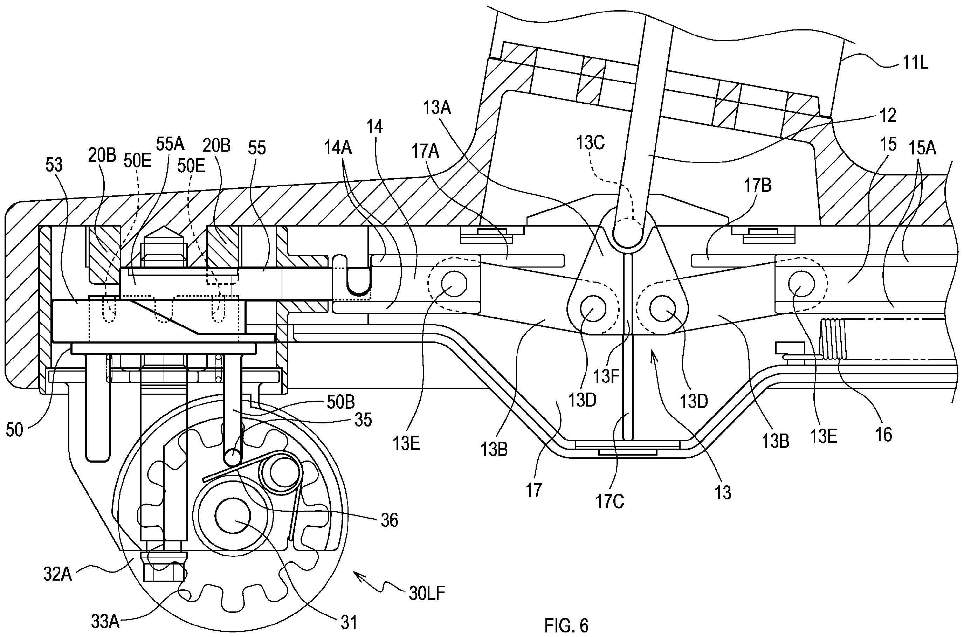

As shown in FIGS. 5 and 6, the link mechanism 13 includes a first link portion 13A, and second link portions 13B. The first link portion 13A has a shape of a triangle with rounded corners in the views from the visual direction in FIGS. 5 and 6. The rounded triangle is arranged such that one vertex is positioned on the upper side in the vertical direction and two vertices are positioned on the lower side along a horizontal plane.

The first link portion 13A includes a first rotation retainer 13C on the upper side of the first link portion 13A in the vertical direction, specifically, near the vertex on the upper side in the vertical direction. The first rotation retainer 13C holds the first link portion 13A on the rod 12 in a rotatable manner. The first rotation retainer 13C serves as the central axis of the rotation of the first link portion 13A.

The first link portion 13A also includes second rotation retainers 13D at two positions on the lower side of the first link portion 13A in the vertical direction, specifically, near the two vertices on the lower side in the vertical direction. The second rotation retainers 13D hold the respective second link portions 13B connected thereto on the first link portion 13A in a rotatable manner. The second rotation retainers 13D serve as the central axes of the rotation of the second link portions 13B.

Each second rotation retainer 13D is equidistant from the first rotation retainer 13C. In other words, the triangle connecting the first rotation retainer 13C and the two second rotation retainers 13D forms the shape of an isosceles triangle in which the first rotation retainer 13C is the vertex angle at the top.

As shown partly in FIGS. 4 and 6, the storing portion 17 includes link grooves 17C extending in the vertical direction near the first link portion 13A. The first link portion 13A includes link ribs 13F. The link ribs 13F are provided between the two second rotation retainers 13D projecting toward the front and back sides of the sheet surfaces of the drawings, and extend in the vertical direction. The link ribs 13F are inserted in the link grooves 17C and movable only in the vertical direction along the link grooves 17C.

The second link portions 13B are plate-shaped members each provided with a second rotation retainer 13D at its first end and a third rotation retainer 13E at its second end. The third rotation retainers 13E hold the connected second link portions 13B in a manner rotatable in relation to the respective sliding portions 14, 15.

In each second link portion 13B, the length from the second rotation retainer 13D to the third rotation retainer 13E is designed to be larger than the length from the first rotation retainer 13C to the second rotation retainer 13D. Such a configuration renders the travel distance of the rod 12 longer than the travel distance of the sliding portions 14, 15.

The sliding portions 14, 15 are movable only substantially in the horizontal direction. In the example shown in FIG. 2, the sliding portions 14, 15 are movable only in the left-right direction of the sheet surface of the drawing.

Specifically, as shown in FIGS. 4 to 6, the sliding portions 14, 15 respectively include rib portions 14A, 15A extending along their upper ends and the lower ends in the longitudinal direction and projecting toward the left and right sides of their travel direction. The left and right sides in the travel direction are the front and back sides of the sheet surfaces of FIGS. 5 and 6.

The storing portion 17 includes grooved portions 17A, 17B formed on its inner surface and extending in the horizontal direction. The grooved portions 17A, 17B each include two or more grooves along the positions where the sliding portions 14, 15 can be moved. The sliding portions 14, 15 are slidable along the grooved portions 17A, 17B while the rib portions 14A, 15A are respectively inserted in the grooved portions 17A, 17B.

When the rod 12 is pulled down as shown in FIG. 5, the link mechanism 13 is in a state where the third rotation retainers 13E are near the rod 12, in other words, the sliding portions 14, 15 are drawn toward the rod 12. In contrast, when the rod 12 is pulled up as shown in FIG. 6, the link mechanism 13 is in a state where the third rotation retainers 13E are away from the rod 12, in other words, the sliding portions 14, 15 are pushed out away from the rod 12.

### [1-4. Configuration of Caster Device]

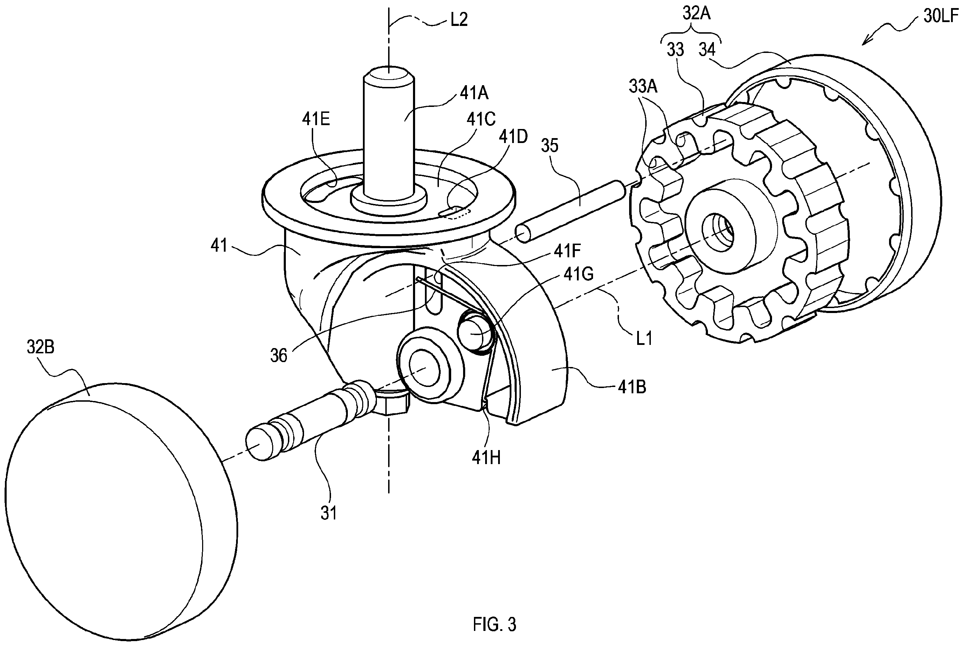

As shown in FIGS. 2 and 3, the caster 30LF includes two wheels 32A, 32B. The caster 30LF is held by the drive shaft 31 arranged in the housing 41, and is configured such that the two wheels 32A, 32B are rotatable about a drive axis L1. The drive shaft 31 is arranged such that the central axis thereof coincides with the drive axis L1. The two wheels 32A, 32B face each other across a pin 35, and mounted in the housing 41 through the drive shaft 31. Of the two wheels 32A, 32B, the wheel 32A will be described below. The wheel 32B is configured similarly to the wheel 32A.

As shown in FIG. 3, the wheel 32A includes an inner wheel 33 disposed on the inner side and an outer wheel 34 disposed on the outer side. The outer circumference of the outer wheel 34 is in contact with a floor surface. The outer wheel 34 receives the inner wheel 33 in a fitting manner on the inner side so that the outer wheel 34 is rotatable with the inner wheel 33. The outer wheel 34 is made of a material softer than that of the inner wheel 33.

The inner wheel 33 is provided with grooves 33A on the inner circumferential surface thereof. The grooves 33A are formed into a manner such that the inner wheel 33 is shaped to resemble an internal gear. The grooves 33A are rotatable in association with the rotation of the wheel 32A about the drive axis L1. Each groove 33A has walls extending in the radial direction of the inner wheel 33. When the pin 35 touches any one of the grooves 33A, the inner wheel 33 is inhibited from moving in the circumferential direction by the pin 35.

The grooves 33A only need to move in association with the rotation of the wheel 32A, and thus may be formed on another member. For example, the grooves 33A may be formed on another rotor that rotates in association with the rotation of the wheel 32A. In addition, the wheel 32A may be configured such that a portion thereof corresponding to the inner and outer wheels 33, 34 is formed into an integrated manner. In such a case, the outer circumference of the wheel 32A is preferably made of a material softer than that of the inner circumference.

As shown in FIG. 3, the housing 41 includes the turning shaft 41A, a wheel holding portion 41B, a seat 41C, a push-down hole 41D, and a guide hole 41E. The push-down hole 41D and the guide hole 41E will be described later. In the housing 41, the pin 35 and the first coil spring 36 are disposed.

The turning shaft 41A is formed into a cylindrical shape and has a turn axis L2 that is the central axis in the vertical direction. In other words, the housing 41 rotates with the caster 30LF about the turn axis L2, thereby facilitating the movement of the mobile table 1 to a desired position.

The wheel holding portion 41B holds the drive shaft 31, the pin 35, and the first coil spring 36, and covers outside of the drive shaft 31, the pin 35, and the first coil spring 36. Specifically, the wheel holding portion 41B includes a pin holder 41F. The wheel holding portion 41B includes a center retainer 41G. The wheel holding portion 41B includes an end holder 41H.

The pin holder 41F is provided as a slot to hold the pin 35 such that the pin 35 is vertically slidable. The center retainer 41G holds the central portion of the first coil spring 36, that is, the wound portion of the first coil spring 36. The end holder 41H holds one end of the first coil spring 36 that does not touch the pin 35.

The pin 35 is a bar-shaped member and movable substantially in the vertical direction along the pin holder 41F. The pin 35 is displaceable between a first and a second position. In the first position, one end of the pin 35 engages with any one of the grooves 33A and thereby the caster 30LF is in the locked state. In the second position, the end of the pin 35 is away from the grooves 33A and thus the caster 30LF is in the unlocked state.

The first coil spring 36 has a first and a second end. The second end is on the side that is not held by the end holder 41H and that linearly extends from the wound portion. The first end of the first coil spring 36 urges the pin 35 in a first direction that is vertically upward in the present embodiment. In the place of the first coil spring 36, the mobile table 1 may include a member, such as a leaf spring, a rubber member, and so on, that urges the pin 35 in the first direction.

### [1-5. Configuration of Caster Locking Mechanism]

The caster device 10L includes caster locking mechanisms 40. The caster locking mechanisms 40 are configured to lock and unlock the casters 30 to control the rotation about the drive axes L1 and the rotation about the turn axes L2.

As shown in FIG. 4, each caster locking mechanism 40 includes the components arranged in the casing 20. Such components include, in order from inside, a second coil spring 43, the interlocked portion 50, a cam 53, and a guide 57.

The caster device 10L also includes cylindrical portions 20A and the projections 20B in the casing 20. Each cylindrical portion 20A is a cylindrical portion projecting vertically downward from the ceiling of the casing 20, that is, from the upper inner wall in the vertical direction. The projections 20B project outward from the outer circumferential surface of the cylindrical portion 20A in horizontally different directions. The projections 20B also project vertically downward within the inner wall of the casing 20.

The second coil spring 43 has an inner diameter slightly larger than the outer diameter of the turning shaft 41A, and is mounted on the seat 41C while the turning shaft 41A is inserted therein. The second coil spring 43 is arranged in a pressed and contracted state with the lower end thereof in contact with the seat 41C and the upper end thereof in contact with a base 50A of the interlocked portion 50. The second coil spring 43 generates a force that acts to return to an unpressed and uncontracted state from the pressed and contracted state, and thereby urges the interlocked portion 50 vertically upward.

The interlocked portion 50 includes the base 50A, a depressing piece 50B, a guide piece 50C, protrusions 50D, and the recesses 50E that are integrally formed into a single piece. The interlocked portion 50 may be formed with two or more members that move together.

The base 50A is an annular portion positioned nearly at the center of the interlocked portion 50 in the vertical direction. The base 50A is designed to have a hole of a certain size at the center of the ring so that the turning shaft 41A is inserted therein and the second coil spring 43 is in contact with the bottom surface of the base 50A in the vertical direction.

The depressing piece 50B and the guide piece 50C are bar-shaped members projecting downward from the base 50A in the vertical direction. The seat 41C of the housing 41 is provided with the push-down hole 41D and the guide hole 41E that substantially match in size with the depressing piece 50B and the guide piece 50C. The depressing piece 50B and the guide piece 50C are inserted respectively in the push-down hole 41D and the guide hole 41E. Such a configuration enables the interlocked portion 50 to rotate with the housing 41 about the turn axis L2.

The depressing piece 50B touches the pin 35 at a position below the push-down hole 41D in the vertical direction so as to displace the pin 35 upward and downward in association with the upward and downward movement of the entire interlocked portion 50.

The protrusions 50D and the recesses 50E are part of a cylindrical portion projecting vertically upward from the base 50A. The interlocked portion 50 is formed into a shape in which the upper edge of the cylindrical portion is cut away at several positions. In the interlocked portion 50, the cutaway portions of the cylindrical portion are the recesses 50E and the remainder portions on the upper edge are the protrusions 50D.

The recesses 50E are configured to transition, by the upward and downward movement of the interlocked portion 50, between an engaged state where the recesses 50E mesh with the projections 20B in the casing 20 and a separate state where the recesses 50E are away from the projections 20B.

The cam 53 is in contact with the upper surface of the base 50A of the interlocked portion 50. The cam 53 includes an upper step surface 53A, a cylindrical portion 53B, a tapered portion 53C, and a lower step surface 53D. The cylindrical portion 53B has an inner diameter in which the cylindrical portion of the interlocked portion 50 with the protrusions 50D and the recesses 50E can be inserted, and has a specified thickness. The thickness of the cylindrical portion 53B, namely the length in the vertical direction, is designed based on the travel distance necessary for the upward and downward movement of the interlocked portion 50.

The upper step surface 53A is nearly parallel to a horizontal plane and almost flush with the upper end of the cylindrical portion 53B. The upper step surface 53A is arranged on the far side of the tapered portion 53C in a view from the U-shaped portion 55.

The lower step surface 53D is nearly parallel to a horizontal plane and almost flush with the lower end of the cylindrical portion 53B. The lower step surface 53D is arranged on the near side of the tapered portion 53C in a view from the U-shaped portion 55.

The upper step surface 53A and the lower step surface 53D are connected via the inclined surface of the tapered portion 53C.

In the caster device 10L, the sliding portions 14, 15 are connected to the respective U-shaped portions 55 at the ends away from the link mechanism 13. The U-shaped portions 55 are displaced in the horizontal direction in conjunction with the sliding portions 14, 15. As shown in FIG. 4, each U-shaped portion 55 includes branches 55A, formed by dividing the U-shaped portion 55, on one side away from the sliding portions 14 or 15.

The branches 55A are formed into a shape split into the left and right sides relative to the travel direction of the U-shaped portion 55. Each branch 55A is arranged such that the lower surface thereof is in contact with the upper surface of the cam 53. The branches 55A come into contact with one of the upper step surface 53A, the tapered portion 53C, and the lower step surface 53D depending on the position of the U-shaped portion 55 in the horizontal direction.

Based on the portion of the cam 53 in contact with the branches 55A, the cam 53 is vertically displaced. Specifically, when the branches 55A are in contact with the lower step surface 53D, the cam 53 is positioned the highest, whereas when the branches 55A are in contact with the upper step surface 53A, the cam 53 is positioned the lowest.

The guide 57 is nearly cylindrically shaped and arranged around the cylindrical portion 20A and the projections 20B to be in contact with the inner wall of the casing 20. The guide 57 includes a body 57A and an opening 57B.

The body 57A is nearly cylindrically shaped, having a central axis in a direction along the turn axis L2. The body 57A is formed such that the inner circumferential surface thereof nearly matches in dimension the outer circumferential surface of the cam 53. In other words, the body 57A is formed such that the cam 53 is slidable upward and downward along the inner circumference of the body 57A.

The opening 57B is where the branches 55A of the U-shaped portion 55 are inserted. The opening 57B provides a minimal space to allow passage of the U-shaped portion 55 through the opening 57B. The opening 57B allows the U-shaped portion 55 to move in the insertion direction and inhibits the U-shaped portion 55 from moving in the up-down and left-right directions relative to the insertion direction.

### [1-6. Actuation of Caster Locking Mechanism]

FIG. 5 shows the state where the rotation of the wheel 32A about the drive axis L1 and the rotation of the housing 41 about the turn axis L2 are inhibited. This state corresponds to one example of the locked state and the rotation inhibited state of the present disclosure.

As shown in FIGS. 2 and 4, a hook 15B is provided at the bottom of the sliding portion 15, and a spring 16 is arranged on one side of hook 15B adjacent to the link mechanism 13. The spring 16, when stretched, generates a force to be unstretched. A first end of the spring 16 is connected to the hook 15B while a second end is connected to the storing portion 17.

The mobile table 1 is brought into a state where the sliding portion 15 is pulled toward the rod 12 due to the force of the spring 16, that is the state shown in FIG. 5, when no external force acts on the rod 12. The movement of the sliding portion 15 at the bottom of which the spring 16 is arranged is transmitted to the sliding portion 14 where the spring 16 is not arranged through the link mechanism 13. As a result, the sliding portion 14 is also pulled toward the rod 12.

In the state shown in FIG. 5, the pin 35 penetrates one of the grooves 33A of the wheel 32A, and, since the pin 35 is not movable in the rotational direction of the wheel 32A, the wheel 32A cannot rotate about the drive axis L1. Moreover, in the state shown in FIG. 5, the projections 20B of the casing 20 mesh with part of the recesses 50E of the interlocked portion 50, and thus the interlocked portion 50 and the housing 41 cannot rotate about the turn axis L2.

That is, in the state shown in FIG. 5, the rotation of the wheel 32A about the drive axis L1 and the rotation of the housing 41 about the turn axis L2 are both inhibited at the same time.

On the other hand, in the state shown in FIG. 6, the rotation of the wheel 32A about the drive axis L1 and the rotation of the housing 41 about the turn axis L2 are allowed. This state corresponds to one example of the unlocked state and the rotation allowed state of the present disclosure.

In the state shown in FIG. 6, the rod 12 and the first link portion 13A are pulled upward in contrast to the state shown in FIG. 5. The second link portions 13B cause the sliding portions 14, 15 to slide in directions away from the rod 12.

As the sliding portions 14, 15 move, the U-shaped portions 55 also move in the horizontal direction and thereby the branches 55A of the U-shaped portions 55 push the cams 53 downward. As the cams 53 move in this manner, the interlocked portions 50 are also pushed downward. As a result, the depressing pieces 50B of the interlocked portions 50 push the pins 35 downward, separating the pins 35 from the grooves 33A. Accordingly, the wheels 32A become rotatable about the drive axes L1.

In this state, the recesses 50E of the interlocked portion 50 are also separated from the projections 20B of the casing 20, and thereby the housings 41 are rotatable about the turn axes L2. That is, in the mobile table 1 according to the present embodiment, the rotation of the casters 30 about the drive axes L1 and the turn axes L2 can be allowed or inhibited simply by the upward and downward movement of the rods 12.

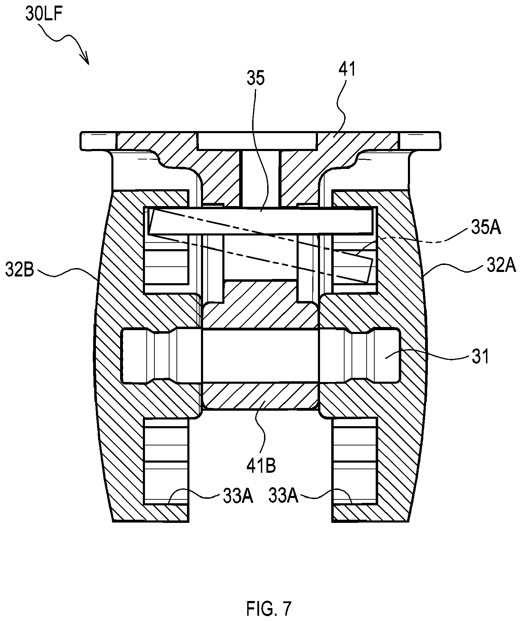

As shown in FIG. 7, the pin 35 is configured such that both ends thereof are engageable with the grooves 33A of the wheel 32A. In this configuration, even when a first end of the pin 35 is stuck at a peak between one of the grooves 33A and another as depicted with a chain double dashed line as a pin 35A in FIG. 7, it is possible to improve the likelihood of a second end of the pin 35 being received within the grooves 33A.

### [1-7. Effects]

According to the embodiment described in detail above, the following effects are achieved.

(1a) One embodiment of the present disclosure provides the caster devices 10L, 10R each having at least one caster 30. Each of the caster devices 10L, 10R includes the grooves 33A, the pin 35, and the interlocked portion 50. The grooves 33A are rotatable in association with rotation of the at least one caster 30 about the drive axis L1 of the at least one caster 30. The bar-shaped pin 35 is displaceable between the first and second positions. The first position is where one end of the pin 35 engages with any one of the grooves 33A and thereby the at least one caster is in the locked state. The second position is where the end of the pin 35 is displaced away from the grooves 33A and thus the at least one caster is in the unlocked state. The interlocked portion 50 is interlocked with the pin 35 and displaceable in response to an external force so as to displace the pin 35 between the first and second positions.

With such a configuration, driving the interlocked portion 50 can cause the pin 35 to be driven and thereby the caster 30 to be transitioned between the locked and unlocked states. It is only the driving of the pin 35 that is necessary in the vicinity of the caster 30; thus, the configuration to lock and unlock the caster 30 can be simplified as compared with conventional configurations. Moreover, such a configuration can reduce the size of the components of the caster locking mechanism 40 that need to be arranged in the vicinity of the wheels 32A, 32B, thus reducing the size of the wheels 32A, 32B.

(1b) In one embodiment of the present invention, the caster devices 10L, 10R each further include the first coil spring 36 urging the pin 35 in the first direction. The interlocked portion 50 is movable to be away from the pin 35 and configured to press the pin 35 against the urging force of the first coil spring 36 so as to displace the pin 35.

With such a configuration, the pin 35 and the interlocked portion 50 can be moved away from each other, which hinders transmission of the external force applied to one of the pin 35 and the interlocked portion 50 to another. Accordingly, it is possible to reduce transmission of vibration to each member, such as the pin 35 and the interlocked portion 50, and thus to reduce a load imposed on each member due to an impact.

(1c) In one embodiment of the present invention, the at least one caster 30 includes the two wheels 32A, 32B each having the two or more grooves 33A formed on the inner circumferential surfaces of the two wheels 32A, 32B. The two wheels 32A, 32B face each other across the pin 35. The pin 35 is configured such that, in the locked state, each end of the pin 35 in the longitudinal direction is engageable with any one of the two or more grooves of a corresponding wheel of the two wheels 32A, 32B.

Such a configuration can improve the likelihood that at least one end of the pin 35 engages with the grooves 33A. That is, the wheels 32A, 32B can be easily locked irrespective of the positions of the wheels 32A, 32B in the circumferential direction about the drive axis L1, in other words, the positions of the grooves 33A.

(1d) In one embodiment of the present invention, the caster devices 10L, 10R each further include the at least one drive shaft 31, the housing 41, the casing 20, and the interlocked portion 50.

The drive shaft 31 and the housing 41 are configured to hold the at least one caster 30 such that the at least one caster 30 is rotatable about the drive axis L1. The cylindrical portion 20A of the casing 20 is configured to hold the drive shaft 31 and the housing 41 such that the drive shaft 31 and the housing 41 are rotatable about the turn axis L2 orthogonal to the drive axis L1. The interlocked portion 50 and the projections 20B are configured to transition between the rotation inhibited state where the drive shaft 31 and the housing 41 are inhibited from rotating and the rotation allowed state where the drive shaft 31 and the housing 41 are allowed to rotate.

Such a configuration can also inhibit the rotation in the turning direction in the case where the at least one caster 30 is rotatable about the drive axis L1 and in the turning direction.

(1e) In one embodiment of the present invention, the projections 20B are arranged in the casing 20 (for example, on the cylindrical portion 20A). The recesses 50E of the interlocked portion 50 are configured to mesh with the projections 20B in the rotation inhibited state, and to be positioned away from the projections 20B in the rotation allowed state.

With such a configuration, the rotation in the turning direction can be inhibited by meshing of the projections 20B and the recesses 50E of the interlocked portion 50.

(1f) In one embodiment of the present invention, the recesses 50E of the interlocked portion 50 is integrally formed with the interlocked portion 50 into a single piece.

With such a configuration, the recesses 50E of the interlocked portion 50 is integrally formed with the interlocked portion 50 into a single piece and thereby the number of parts can be reduced. This configuration also enables simultaneous locking or unlocking of the rotation about the drive axis L1 and the rotation about the turn axis L2.

(1g) In one embodiment of the present invention, the two or more drive shafts 31, each including the at least one caster 30, and the housings 41 may be provided. The casing 20 may hold the two or more drive shafts 31 and the housings 41 in a rotatable manner.

With such a configuration, the projections 20B are arranged in the casing 20, inhibiting the at least one caster 30 from rotating about the turn axis L2. Accordingly, it is possible to inhibit the at least one caster 30 from jiggling and to reliably maintain the rotation inhibited state.

### [2. Other Embodiments]

Embodiments of the present invention have been described hereinabove; however, the present invention should be not be limited to the above-described embodiments and may be implemented in variously modified manners.

(2a) In the above-described embodiment, the caster devices 10L, 10R of the present invention are used for the mobile table 1. The application of the present invention, however, is not be limited to this example. The caster devices 10L, 10R of the present invention may be used for, for example, movable objects, such as furniture and household or office equipment that a user would like to turn into mobile, in other words, to any configuration that includes at least one caster 30. Examples of the furniture include chairs, chests of drawers, bookshelves, and wardrobes in addition to the mobile table 1. Examples of the household or office equipment include cabinets, display racks, refrigerators, freezers, and reception counters.

(2b) In the above-described embodiment, the rod 12 is actuated by the external force applied in response to the movement of the top panel 5 or operation of the levers 9 (i.e, 9A, 9BL, 9BR). Alternatively or additionally, the rod 12 may be actuated by user's operation to directly displace the rod 12 or by an actuator.

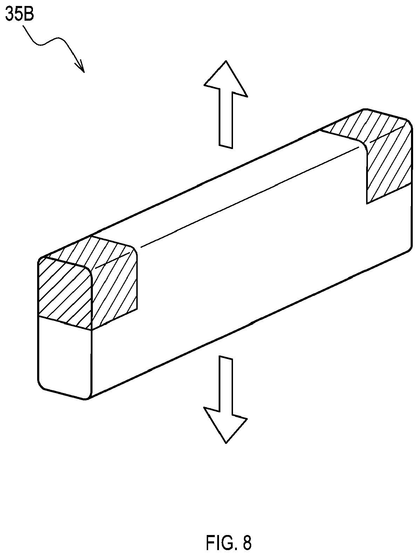

(2c) In the above-described embodiment, the pin 35 is formed into a round bar with a constant thickness in its entirety. However, the shape is not limited to this example. That is, the pin 35 of the present invention may be formed similarly to pins 35B, 35C, 35D shown in FIGS. 8 to 10 so that at least portions thereof to be engaged with the grooves 33A are in the shape of bars. In FIGS. 8 to 10, the hatched portions represent the portions to be engaged with the grooves 33A.

For example, the pin 35B shown in FIG. 8 is in the shape of a rectangular bar, in other words, a rectangular parallelepiped. The pin 35B is arranged such that the longitudinal direction of the pin 35B is parallel to the drive axis L1 and a projected area of the pin 35B in the vertical direction is minimized.

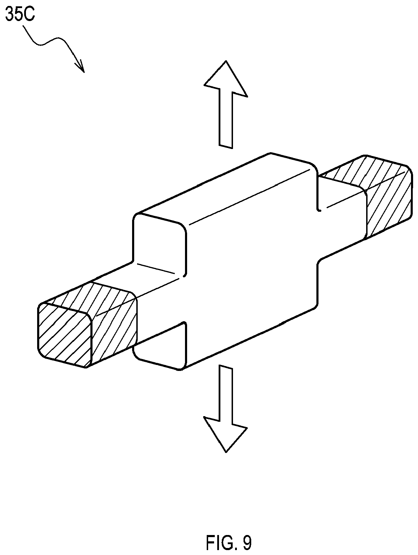

For another example, the pin 35C shown in FIG. 9 is formed such that only the portions thereof to be engaged with the grooves 33A are in the shape of thin bars while the portion that does not engage with the grooves 33A is in the shape of a bar with a thickness larger than that of the thin bars.

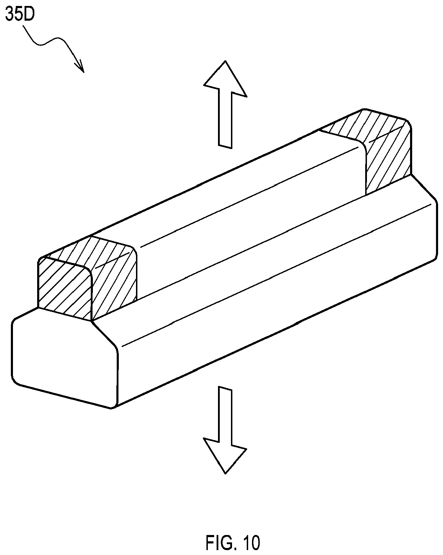

For still another example, the pin 35D shown in FIG. 10 includes a top portion and a bottom portion arranged in the vertical direction. The bottom portion is in the shape of a thick bar, whereas the top portion to be engaged with the grooves 33A is in the shape of a thin bar. These portions are formed into a single pin.

(2d) Functions of one component in the aforementioned embodiments may be achieved by two or more components, and a function of one component may be achieved by two or more components. Moreover, functions of two or more components may be achieved by one component, and a function achieved by two or more components may be achieved by one component. Furthermore, a part of the configurations of the aforementioned embodiments may be omitted. At least part of the configurations of the aforementioned embodiments may be added to or replaced with other configurations of the aforementioned embodiments.

(2e) In addition to the above-described caster devices 10L, 10R, it is possible to implement the present invention in various forms such as furniture, household or office equipment, and movable objects that each include the caster devices 10L, 10R as components.

### [Explanation of Reference Numerals]

1...mobile table, 10L, 10R...caster device, 11L, 11R...leg, 12...rod, 13...link mechanism, 13A...first link portion, 13B...second link portion, 13C...first rotation retainer, 13D...second rotation retainer, 13E...third rotation retainer, 14, 15...sliding portion, 20...casing, 20A...cylindrical portion, 20B...projection, 30LF, 30LR, 30RF, 30RR...caster, 31...drive shaft, 32A, 32B...wheel, 33...inner wheel, 33A...groove, 34...outer wheel, 35, 35A, 35B, 35C, 35D...pin, 36...first coil spring, 40...caster locking mechanism, 41...housing, 41A...turning shaft, 41B...wheel holding portion, 41C...seat, 41D ... push-down hole, 41E...guide hole, 41F...pin holder, 41G...center retainer, 41H...end holder, 43...second coil spring, 50...interlocked portion, L1...drive axis, L2...turn axis.

## Claims

1. A caster device (10L, 10R) with at least one caster (30LF, 30LR, 30RF, 30RR), the caster device including:
two or more grooves (33A) rotatable in association with rotation of the at least one caster about a drive axis of the at least one caster;
a bar-shaped pin (35, 35A; 35B; 35C; 35D) displaceable between a first position and a second position, the first position being where an end of the pin engages with any one of the two or more grooves and thereby the at least one caster is in a locked state, and the second position being where the end of the pin is away from the grooves and thus the at least one caster is in an unlocked state; and
an interlocked portion (50) that is interlocked with the pin and displaceable in response to an external force so as to displace the pin between the first position and the second position, **characterized in**, by further including a biasing member (36) urging the pin in a first direction,
wherein the interlocked portion is movable to be away from the pin and configured to press the pin against an urging force of the biasing member so as to displace the pin..

2. The caster device according to claim 1,
wherein the at least one caster includes two wheels (32A, 32B) each having two or more grooves formed on inner circumferential surfaces of the two wheels,
wherein the two wheels face each other across the pin, and
wherein the pin is configured such that, in the locked state, each end of the pin in a longitudinal direction is engageable with any one of the two or more grooves of a corresponding wheel of the two wheels.

3. The caster device according to any one of claims 1 to 2, further including:
at least one driving retainer (31, 41A) configured to hold the at least one caster such that the at least one caster is rotatable about the drive axis;
a turning retainer (20, 20A) configured to hold the at least one driving retainer such that the at least one driving retainer is rotatable about a turn axis orthogonal to the drive axis, and
a turning inhibiting portion (20B, 50E) configured to transition between a rotation inhibited state where the at least one driving retainer is inhibited from rotating and a rotation allowed state where the at least one driving retainer is allowed to rotate.

4. The caster device according to claim 3,
wherein the turning inhibiting portion includes:
a projecting portion (20B) arranged on the turning retainer; and
a movable portion (50E) configured to mesh with the projecting portion in the rotation inhibited state, and to be positioned away from the projecting portion in the rotation allowed state.

5. The caster device according to claim 4,
wherein the movable portion is integrally formed with the interlocked portion into a single piece.

6. The caster device according to any one of claims 3 to 5,
wherein the at least one driving retainer comprises two or more driving retainers each holding a corresponding one of the at least one caster in a rotatable manner, and
wherein the turning retainer is configured to hold the two or more driving retainers in a rotatable manner.

## Patentansprüche

1. Lenkrollenvorrichtung (10L, 10R) mit mindestens einer Lenkrolle (30LF, 30LR, 30RF, 30RR), wobei die Lenkrollenvorrichtung Folgendes aufweist:
zwei oder mehr Nuten (33A), die gemeinsam mit der Drehung der mindestens einen Lenkrolle um eine Antriebsachse der mindestens einen Lenkrolle drehbar sind,
einen stabförmigen Stift (35, 35A, 35B; 35C; 35D), der zwischen einer ersten Position und einer zweiten Position verschiebbar ist, wobei es sich bei der ersten Position um die Stelle handelt, an der ein Ende des Stifts mit einer beliebigen der zwei oder mehr Nuten in Eingriff kommt, wodurch die mindestens eine Lenkrolle in einem arretierten Zustand ist, und bei der zweiten Position um die Stelle, an der das Ende des Stifts von den Nuten weg liegt, so dass die mindestens eine Lenkrolle in einem nicht arretierten Zustand ist, und
einen verriegelten Abschnitt (50), der mit dem Stift verriegelt und als Reaktion auf eine äußere Kraft verschiebbar ist, um den Stift zwischen der ersten Position und der zweiten Position zu verschieben, **dadurch gekennzeichnet, dass** sie ferner ein Vorspannglied (36) aufweist, das den Stift in eine erste Richtung drängt,
wobei der verriegelte Abschnitt beweglich ist, so dass er von dem Stift weg liegt, und dazu ausgestaltet ist, den Stift entgegen einer Drängkraft des Vorspannglieds zu drücken, um den Stift zu verschieben.

2. Lenkrollenvorrichtung nach Anspruch 1,
wobei die mindestens eine Lenkrolle zwei Räder (32A, 32B) aufweist, die jeweils zwei oder mehr Nuten haben, die an Innenumfangsflächen der beiden Räder ausgebildet sind,
wobei die beiden Räder einander über den Stift hinweg gegenüberliegen und
wobei der Stift so ausgestaltet ist, dass jedes Ende des Stifts in dem arretierten Zustand in einer Längsrichtung mit einer beliebigen der zwei oder mehr Nuten eines entsprechenden Rads der beiden Rädern in Eingriff bringbar ist.

3. Lenkrollenvorrichtung nach einem der Ansprüche 1 bis 2, ferner aufweisend:
mindestens ein Antriebshalter (31, 41A), der dazu ausgestaltet ist, die mindestens eine Lenkrolle so zu halten, dass die mindestens eine Lenkrolle um die Antriebsachse drehbar ist,
einen Drehhalter (20, 20A), der dazu ausgestaltet ist, den mindestens einen Antriebshalter so zu halten, dass der mindestens eine Antriebshalter um eine orthogonal zu der Antriebsachse verlaufende Drehachse drehbar ist,
einen Drehhemmabschnitt (20B, 50E), der dazu ausgestaltet ist, zwischen einem drehgehemmten Zustand, in dem die Drehung des mindestens einen Antriebshalters gehemmt ist, und einem Zustand, in dem die Drehung gestattet ist und in dem sich der mindestens eine Antriebshalter drehen kann, überzugehen.

4. Lenkrollenvorrichtung nach Anspruch 3,
wobei der Drehhemmabschnitt Folgendes aufweist:
einen vorragenden Abschnitt (20B), der an dem Drehhalter angeordnet ist, und
einen beweglichen Abschnitt (50E), der dazu ausgestaltet ist, in dem drehgehemmten Zustand mit dem vorragenden Abschnitt zu kämmen und in dem Zustand, in dem die Drehung gestattet ist, von dem vorragenden Abschnitt weg positioniert zu sein.

5. Lenkrollenvorrichtung nach Anspruch 4,
wobei der bewegliche Abschnitt integral einstückig mit dem verriegelten Abschnitt ausgebildet ist.

6. Lenkrollenvorrichtung nach einem der Ansprüche 3 bis 5,
wobei der mindestens eine Antriebshalter zwei oder mehr Antriebshalter umfasst, die jeweils eine entsprechende der mindestens einen Lenkrolle drehbar halten, und
wobei der Drehhalter zum drehbaren Halten der zwei oder mehr Antriebshalter ausgestaltet ist.

## Revendications

1. Dispositif à roulettes (10L, 10R) ayant au moins une roulette (30LF, 30LR, 30RF, 30RR), le dispositif à roulettes comprenant :
au moins deux rainures (33A) pouvant tourner en association avec la rotation de l'au moins une roulette autour d'un axe d'entraînement de l'au moins une roulette ;
un axe en forme de barre (35, 35A ; 35B ; 35C ; 35D) mobile entre une première position et une seconde position, la première position étant l'endroit où une extrémité de l'axe vient en prise avec l'une quelconque des au moins deux rainures et moyennant quoi l'au moins une roulette est dans un état verrouillé, et la seconde position étant l'endroit où l'extrémité de l'axe est éloignée des rainures et ainsi l'au moins une roulette est dans un état déverrouillé ; et
une partie verrouillée (50) qui est verrouillée avec l'axe et mobile en réponse à une force externe de sorte à déplacer l'axe entre la première position et la seconde position, **caractérisé en ce qu'**il comprend en outre un élément de sollicitation (36) poussant l'axe dans une première direction,
la partie verrouillée étant mobile pour s'éloigner de l'axe et conçue pour presser l'axe contre une force de pression de l'élément de sollicitation de sorte à déplacer l'axe.

2. Dispositif à roulettes selon la revendication 1,
l'au moins une roulette comprenant deux roues (32A, 32B) ayant chacune deux au moins deux rainures formées sur les surfaces circonférentielles intérieures des deux roues,
les deux roues se faisant face de part et d'autre de l'axe, et
l'axe étant conçu de sorte que, à l'état verrouillé, chaque extrémité de l'axe dans une direction longitudinale puisse venir en prise avec l'une des au moins deux rainures d'une roue correspondante des deux roues.

3. Dispositif à roulettes selon l'une quelconque des revendications 1 à 2, comprenant en outre :
au moins un dispositif de retenue d'entraînement (31, 41A) conçu pour maintenir l'au moins une roulette de sorte que l'au moins une roulette puisse tourner autour de l'axe d'entraînement ;
un dispositif de retenue de rotation (20, 20A) conçu pour maintenir l'au moins un dispositif de retenue d'entraînement de sorte que l'au moins un dispositif de retenue d'entraînement puisse tourner autour d'un axe de rotation orthogonal à l'axe d'entraînement, et
une partie empêchant la rotation (20B, 50E) conçue pour passer d'un état d'inhibition de rotation où l'au moins un dispositif de retenue d'entraînement est empêché de tourner à un état d'autorisation de rotation où l'au moins un dispositif de retenue d'entraînement est autorisé à tourner.

4. Dispositif à roulettes selon la revendication 3,
la partie empêchant la rotation comprenant :
une partie saillante (20B) disposée sur le dispositif de retenue de rotation ; et
une partie mobile (50E) conçue pour s'engrener avec la partie saillante dans l'état d'inhibition de la rotation, et pour être positionnée à l'opposé de la partie saillante dans l'état d'autorisation de la rotation.

5. Dispositif à roulettes selon la revendication 4,
la partie mobile étant formée d'une seule pièce avec la partie verrouillée.

6. Dispositif à roulettes selon l'une quelconque des revendications 3 à 5,
l'au moins un dispositif de retenue d'entraînement comprenant au moins deux dispositifs de retenue d'entraînement, chacun retenant de manière rotative une roulette correspondante de l'au moins une roulette, et
le dispositif d'entraînement de rotation étant conçu pour maintenir les au moins deux dispositifs de retenue d'entraînement de manière rotative.
